# DEMANDE DE BREVET EUROPEEN

(11) **EP 4 390 734 A1**
(43) Date de publication de la demande: **26.06.2024**
(21) Numéro de dépôt: 23216933.4
(22) Date de dépôt: 14.12.2023
(51) Int. Cl.: G06F 21/51, G06F 21/57, G06F 21/44

(54) **PROCEDE DE CONFIGURATION**

(30) Priorité: 21.12.2022 FR 2214163
(71) Demandeur: STMicroelectronics (Grand Ouest) SAS, 72100 Le Mans (FR)
(72) Inventeur: JAOUEN, Michel, 72530 YVRE L'EVEQUE (FR)
(74) Mandataire: Thibon, Laurent

(57) **Abrégé**

La présente description concerne un procédé de configuration d'un dispositif électronique configuré pour supporter au moins deux configurations, une des configurations étant installée, le dispositif comprenant une mémoire (14), la mémoire (14) comprenant, dans une région (22) à accès limité, un mot binaire (24) comprenant :
- une première valeur représentative de la version de la configuration installée ; et
- au moins une deuxième valeur indiquant quelles configurations peuvent être installées,
le procédé comprenant la détermination selon la deuxième valeur si la configuration qui tente d'être installée est permise.

## Description

### Domaine technique

La présente description concerne de façon générale les dispositifs électroniques et plus particulièrement les dispositifs comprenant plusieurs configurations et leurs procédés d'authentification.

### Technique antérieure

Le circuit intégré (CI), aussi appelé puce électronique, est un composant électronique, basé sur un semiconducteur, reproduisant une ou plusieurs fonctions électroniques plus ou moins complexes, intégrant souvent plusieurs types de composants électroniques de base dans un volume réduit (sur une petite plaque), rendant le circuit facile à mettre en oeuvre.

Il existe une très grande variété de ces composants divisés en deux grandes catégories : analogique et numérique.

### Résumé de l'invention

Un mode de réalisation prévoit un procédé de configuration d'un dispositif électronique configuré pour supporter au moins deux configurations, une des configurations étant installée, le dispositif comprenant une mémoire, la mémoire comprenant, dans une région à accès limité, un mot binaire comprenant : - une première valeur représentative de la version de la configuration installée ; et - au moins une deuxième valeur indiquant quelles configurations peuvent être installées, le procédé comprenant la détermination selon la deuxième valeur si la configuration qui tente d'être installée est permise.

Selon un mode de réalisation, la mémoire comprend une région à lecture seule dans laquelle est contenue une clé de cryptage configurée pour décrypter les mises à jour des configurations.

Selon un mode de réalisation, la même clé est utilisée pour les mises à jour de toutes les configurations.

Selon un mode de réalisation, les fichiers des configurations supportées sont tous contenus dans une mémoire du dispositif.

Selon un mode de réalisation, seul le fabricant peut écrire le mot.

Selon un mode de réalisation, la première valeur est contenue dans une première partie du mot.

Selon un mode de réalisation, la deuxième valeur est contenue dans une deuxième partie du mot.

Selon un mode de réalisation, chaque configuration est associée à une troisième valeur, la deuxième partie comprend une première sous-partie dans laquelle est contenue la troisième valeur représentative de la configuration installée.

Selon un mode de réalisation, les troisièmes valeurs associées aux configurations sont classées de telle manière que la croissance de la valeur corresponde à la croissance d'une caractéristique des configurations.

Selon un mode de réalisation, le mot comprend uniquement la première partie et la première sous-partie, les configurations autres que celle associée à la troisième valeur ne pouvant être installées.

Selon un mode de réalisation, le mot comprend une deuxième sous-partie indiquant, pour chaque configuration supportée, si la configuration peut être installée ou non.

Selon un mode de réalisation, la deuxième sous-partie comprend un bit pour chaque configuration supportée, le bit prenant une quatrième valeur si l'installation de ladite configuration est possible et une cinquième valeur si l'installation de ladite configuration n'est pas possible.

Selon un mode de réalisation, le mot comprend une deuxième sous-partie comprenant une valeur minimale, les configurations associées à des valeurs inférieures à la valeur minimale ne pouvant être installées.

Selon un mode de réalisation, le mot comprend une troisième sous-partie comprenant une valeur maximale, les configurations associées à des valeurs supérieures à la valeur maximale ne pouvant être installées.

Selon un mode de réalisation, le mot comprend une deuxième sous-partie comprenant une valeur ayant une première valeur pour indiquer que toutes les configurations peuvent être installées, une deuxième valeur pour indiquer qu'aucune configuration ne peut être installée autre que la configuration installée, une troisième valeur pour indiquer que seules les configurations associées à une valeur inférieure à la valeur de la configuration installée peuvent être installées, et une quatrième valeur pour indiquer que seules les configurations associées à une valeur supérieure à la valeur de la configuration installée peuvent être installées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un dispositif électronique ;
la figure 2 illustre schématiquement le fonctionnement du dispositif de la figure 1 ;
la figure 3 représente plus en détail une partie du dispositif de la figure 1 ; et
la figure 4 illustre des modes de mise en oeuvre d'un procédé d'authentification de configuration.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

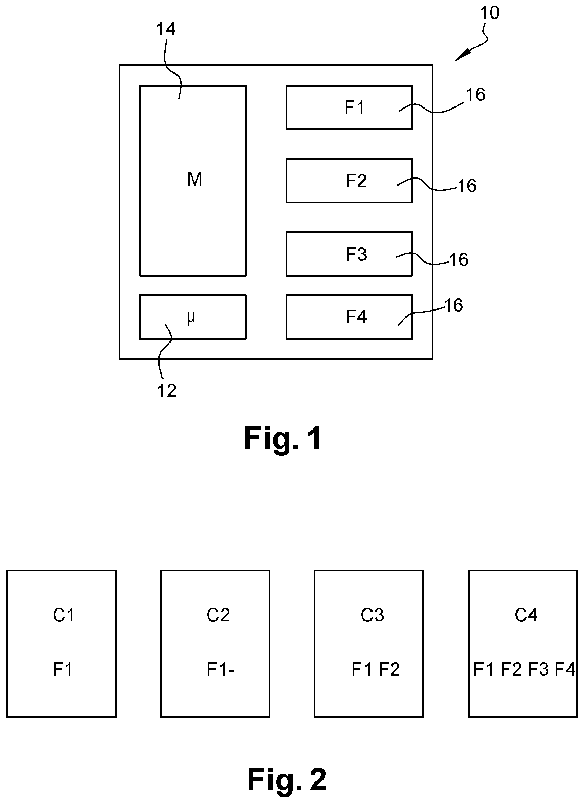

La figure 1 représente un mode de réalisation d'un dispositif électronique 10. Le dispositif 10 est par exemple une puce. Le dispositif 10 est par exemple un circuit intégré.

Le dispositif 10 comprend par exemple un contrôleur, par exemple un microcontrôleur, 12 (µ). Le dispositif 10 comprend par exemple une mémoire 14 (M). La mémoire 14 contient des lignes de codes, correspondant par exemple au logiciel contrôlant le dispositif, et en particulier le microcontrôleur 12. La mémoire 14 est par exemple une mémoire non volatile, par exemple une mémoire morte (ROM - "Read Only Memory") .

Le dispositif 10 comprend au moins un élément, par exemple un circuit, 16 configuré pour effectuer une ou plusieurs fonctions. Dans l'exemple de la figure 1, le dispositif 10 comprend quatre éléments 16. Chacun des éléments 16 est par exemple configuré pour mettre en oeuvre une fonction différente parmi des fonctions F1, F2, F3 ou F4. Les éléments 16 mettent par exemple en oeuvre des fonctions telles que la cryptographie, les interfaces entrée/sortie, etc. Les éléments 16 correspondent par exemple à des périphériques, tels que des dispositifs optoélectroniques, des interfaces homme-machine, etc. De préférence, au moins un élément 16 permet une connexion à un réseau, par exemple une connexion internet par un accès sans fil à internet.

Selon l'application du dispositif, les éléments 16 peuvent ne pas être utilisés par le dispositif en fonctionnement. En effet, de manière à simplifier la fabrication, plus précisément pour ne pas avoir à modifier les étapes du procédé de fabrication, des dispositifs 10 identiques sont fabriquées, et sont par la suite configurés de manière à déterminer quelles fonctions peuvent être utilisés par l'utilisateur. Par exemple, certains dispositifs 10 peuvent être configurés pour n'avoir accès qu'à une partie des éléments 16. Par exemple, certains dispositifs 10 peuvent être configurés pour ne pouvoir utiliser un ou plusieurs éléments 16 que de certaines manières.

La figure 2 illustre schématiquement le fonctionnement du dispositif de la figure 1. Plus précisément, la figure 2 illustre quatre exemples de configurations C1, C2, C3, C4 pouvant être appliqués au dispositif de la figure 1.

Chaque configuration C1 à C4 correspond par exemple à un fichier de codes ou de valeurs de paramètres de configuration. Chaque configuration C1 à C4 est un programme binaire permettant de supporter l'usage de fonction. Le contenu binaire contenu dans chaque configuration, c'est à dire les informations binaires varie selon la ou les fonctions à supporter. Le contenu binaire peut varier au cours du temps lors de l'utilisation de la ou les fonctions. De plus, le contenu binaire peut être mis à jour, par exemple pour corriger des données dans le fichier de configuration. Les différents fichiers de configuration possibles sont contenus dans une mémoire, par exemple dans la mémoire 14.

Une configuration C1 (F1) est telle que seul l'élément 16 permettant d'effectuer la fonction F1 est en fonctionnement. Ainsi, il n'est pas possible pour le dispositif d'utiliser les fonctions F2, F3 et F4.

Une configuration C2 (F1-) est telle que seul l'élément 16 permettant d'effectuer la fonction F1 est en fonctionnement. Cependant, les critères d'utilisation de la fonction F1 sont plus stricts que dans le cas de la configuration C1. Par exemple, la fonction F1 ne peut être utilisée que dans certaines circonstances, par exemple uniquement par un utilisateur ayant une clé de cryptage.

Une configuration C3 (F1 F2) est telle que les éléments 16 permettant d'effectuer la fonction F1 et la fonction F2 sont en fonctionnement. Ainsi, il n'est pas possible pour le dispositif d'utiliser les fonctions F3 et F4 .

Une configuration C4 (F1 F2 F3 F4) est telle que les éléments 16 permettant d'effectuer les fonctions F1, F2, F3 et F4 sont en fonctionnement.

Les dispositifs 10 sont par exemple tous fabriqués de manière à être identiques et à contenir l'ensemble des fichiers de configuration possibles. Les fichiers de configuration contenus dans le dispositif sont par exemple les versions les plus récentes des fichiers de configuration. Les fichiers de configuration peuvent par la suite dans la vie du dispositif être mises à jour et contenir alors une version suivante du fichier de configuration.

Le fichier de configuration correspondant à l'application à laquelle chaque dispositif est destinée est, après la fabrication et par exemple avant la vente à un utilisateur, installé dans le dispositif. Autrement dit, les paramètres de configuration sont installés et mis en oeuvre par les différents éléments du dispositif. La configuration installée, c'est-à-dire la configuration active, détermine donc les éléments pouvant être utilisés et détermine par exemple les niveaux d'autorisation. L'installation d'une configuration différente de celle destinée à être mise en oeuvre par le dispositif, par exemple la configuration C1 pour un dispositif destiné à mettre en oeuvre la configuration C3, entraînerait un déni de service à l'utilisateur qui ne pourrait pas utiliser la fonction F2.

Les configurations, c'est-à-dire les fichiers de configuration, sont par exemple publics. Autrement dit, les fichiers de configuration sont par exemple accessibles par tout utilisateur ayant accès au dispositif.

Les valeurs d'autorisations sont par exemple différentes selon la configuration mise en place. Autrement dit, selon la configuration, certains utilisateurs ou certains logiciels peuvent avoir, ou non accès à certaines régions de la mémoire ou à certains éléments 16.

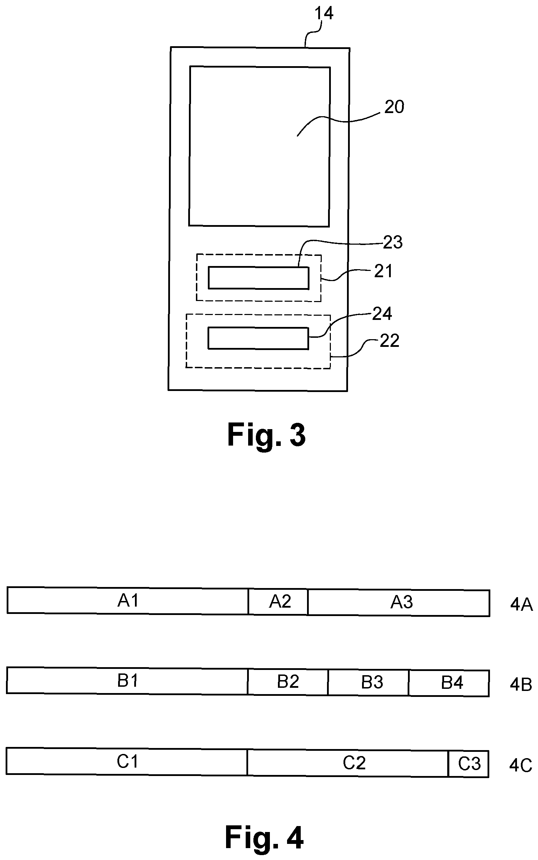

La figure 3 représente plus en détail une partie du dispositif de la figure 1. Plus précisément, la figure 3 illustre schématiquement le contenu d'une mémoire du dispositif 10 de la figure 1, par exemple de la mémoire 14.

Les configurations C1 à C4 décrites en relation avec la figure 2 sont contenues dans une région 20 de la mémoire 14. La région 20 comprend de préférence tous les fichiers de configuration. A titre de variante, au moins un fichier de configuration peut être contenu dans une mémoire différente, par exemple une autre mémoire non volatile.

De préférence, le dispositif 10 contient, de préférence dans la mémoire 14, une unique version de chaque fichier de configuration. Ainsi, lorsqu'un fichier de configuration est mis à jour, la nouvelle version remplace la précédente.

Les mises à jour sont de préférence fournies par le fabricant. Les mises à jour sont par exemple fournies par une connexion internet. Les fichiers des mises à jour des fichiers de configuration sont par exemple cryptés lorsqu'ils sont fournis au dispositif.

La mémoire comprend une région 21. La région 21 est à accès limité. La région 21 est de préférence une région à lecture seule. Autrement dit, le contenu de la mémoire 21 est écrite par le fabricant et ne peut ensuite plus être modifié.

La région 21 comprend un mot binaire 23. Le mot 23 correspond à une clé de cryptage destinée à décrypter les mises à jour des fichiers de configuration. De préférence, les mises à jour de l'ensemble des configurations C1 à C4 sont cryptées par la même clé de cryptage 23.

La mémoire 14 comprend une région 22. La région 22 est à accès limité. La région 22 comprend par exemple le code de démarrage ("boot code") du dispositif 10. L'accès à la région 22 est par exemple limité à un niveau de sécurité élevé. Le code de démarrage est un code configuré pour lire les différentes régions de la mémoire pour les contrôler avant de mettre en oeuvre le code de la région 20. Plus précisément, le code de la région 21 permet d'authentifier le code de la région 20. La région 22 peut cependant être lue et écrite par des utilisateurs ayant l'autorisation. Par exemple, les dispositifs fournissant les mises à jour légitimes, par exemple le fabricant, sont autorisés à écrire dans la région 22.

La région 22 comprend un mot binaire 24. Le mot 24 comprend, dans une première partie, le numéro de la version de la configuration installée et comprend une deuxième partie représentative des configurations pouvant être installées.

Lorsqu'une configuration est mise à jour, la mise à jour est décryptée par la clé 21. La valeur de la version de la mise à jour est ensuite comparée au numéro de la version de la configuration installée situé dans le mot 24. Le dispositif vérifie de plus, par le mot 24, que la mise à jour correspond bien à une configuration autorisée. Le mot 24 est ensuite modifié, par le code de démarrage de manière à contenir la nouvelle valeur de la version de la configuration. Les fichiers de configuration sont par exemple contenus dans la mémoire dans un état décrypté.

Similairement, lorsqu'un utilisateur cherche à modifier la configuration du dispositif, le dispositif détermine, à l'aide de la deuxième partie du mot 24, si la configuration que l'on cherche à installer est autorisée.

Les configurations sont de préférence accessibles au public, c'est-à-dire accessible à tous les niveaux d'accessibilité.

La figure 4 illustre des modes de mise en oeuvre d'un procédé d'authentification de configuration. Plus précisément, la figure représente trois modes de réalisation du mot 24. La figure 4 comprend ainsi trois vues 4A, 4B, et 4C illustrant respectivement des mots 24A, 24B et 24C correspondant à des modes de réalisation du mot 24.

La taille du mot 24 correspond de préférence à la taille maximale d'un mot dans la mémoire 14. Le mot 24 comprend par exemple 32 bits.

Le mot 24A de la vue 4A comprend au moins deux parties : une première partie A1 et une deuxième partie A2. Le mot 24A comprend par exemple une troisième partie A3.

La première partie A1 contient la valeur de la version de la configuration installée. La première partie comprend uniquement la valeur de la version de la configuration installée. La partie A1 a une taille inférieure à la taille totale du mot 24A. La partie A1a par exemple une taille comprise entre un tiers et deux tiers de la taille totale du mot 24A, par exemple la moitié de la taille totale du mot 24A. Ainsi, Si le mot 24A comprend 32 bits et que la partie A1 correspond à la moitié du mot 24A, la partie A1 comprend 16 bits et peut donc comprendre une valeur de version de configuration allant de la version 0 à la version 65535.

La deuxième partie A2 correspond à une valeur représentative de la configuration installée. Ainsi, chaque configuration possible et présente dans la mémoire est par exemple attribuée une valeur binaire. Cette valeur binaire est contenue dans la partie A2. La taille de la partie A2 dépend par exemple du nombre de configurations possibles. Dans l'exemple de la figure 2, le dispositif comprend par exemple quatre configurations possibles. La partie A2 a par exemple une taille de deux bits. Par exemple, la configuration C1 correspond à une valeur binaire 00 dans la partie A2, la configuration C2 correspond à une valeur binaire 01 dans la partie A2, la configuration C3 correspond à une valeur binaire 10 dans la partie A2 et la configuration C4 correspond à une valeur binaire 11 dans la partie A2.

Le mot 24A comprend par exemple uniquement les première et deuxième parties. Dans ce cas, le dispositif est configuré pour que la configuration ne puisse pas être changée. Autrement dit, une configuration ne correspondant pas au numéro de la partie A2 identifiant une configuration autorisée ne peut pas être installée.

La partie A3 comprend par exemple des informations supplémentaires concernant les configurations pouvant être installées. Par exemple, la partie A3 comprend un bit par configuration possible, le bit ayant une première valeur binaire, par exemple la valeur 0, si la configuration correspondante peut être installée, ou la valeur 1, si la configuration correspondante ne peut pas être installée.

Le mot 24B de la vue 4B comprend, comme le mot 24A, au moins deux parties : une première partie B1 et une deuxième partie B2. La partie B1 est par exemple identique à la partie A1. La partie B2 est par exemple identique à la partie A2. Le mot 24B comprend par exemple une troisième partie B3 et une quatrième partie B4.

Dans le mode de réalisation correspondant à la vue 4B, chaque configuration est associée à une valeur binaire, par exemple de telle manière que la croissance des valeurs binaires correspondant aux configurations correspondent à la croissance ou décroissance d'une caractéristique, par exemple le niveau d'autorisation. Ainsi, par exemple, plus la valeur correspondant à la configuration est élevée (ou faible selon un autre mode de réalisation), plus le niveau de sécurité est élevé, et plus le niveau d'autorisation nécessaire pour effectuer certaines actions est important. Alternativement, plus la valeur correspondant à la configuration est élevée (ou faible selon un autre mode de réalisation), plus d'éléments 16 sont accessibles par le dispositif, autrement dit sont commandables par le microcontrôleur.

La partie B3 correspond par exemple à une valeur binaire correspondant à une valeur minimale de configuration pouvant être installée. Ainsi, les configurations étant associés à une valeur binaire inférieure à la valeur comprise dans la partie B3 ne peuvent être installées. Similairement, la partie B4 correspond par exemple à une valeur binaire correspondant à une valeur maximale de configuration pouvant être installée. Ainsi, les configurations étant associés à une valeur binaire supérieure à la valeur comprise dans la partie B4 ne peuvent pas être installées. Ainsi, uniquement les configurations associées à une valeur comprise entre la valeur de la partie B3 et la valeur de la partie B4 peuvent être installées.

Alternativement, la partie B3 correspond par exemple à une valeur binaire correspondant à une valeur minimale de configuration ne pouvant pas être installée. Ainsi, les configurations étant associés à une valeur binaire inférieure à la valeur comprise dans la partie B3 peuvent installées. Similairement, la partie B4 correspond par exemple à une valeur binaire correspondant à une valeur maximale de configuration ne pouvant pas être installée. Ainsi, les configurations étant associés à une valeur binaire supérieure à la valeur comprise dans la partie B4 peuvent être installées. Ainsi, uniquement les configurations associées à une valeur comprise entre la valeur de la partie B3 et la valeur de la partie B4 ne peuvent pas être installées.

Le mot 24C de la vue 4C comprend, comme le mot 24A, au moins deux parties : une première partie C1 et une deuxième partie C2. La partie C1 est par exemple identique à la partie A1. La partie C2 est par exemple identique à la partie A2. Le mot 24B comprend par exemple une troisième partie C3.

Comme dans le mode de réalisation correspondant à la vue 4B, chaque configuration est associée à une valeur binaire, par exemple de telle manière que la croissance des valeurs binaires correspondant aux configurations correspondent à la croissance ou décroissance d'une caractéristique, par exemple le niveau d'autorisation. Ainsi, par exemple, plus la valeur correspondant à la configuration est élevée (ou faible selon un autre mode de réalisation), plus le niveau de sécurité est élevé, et plus le niveau d'autorisation nécessaire pour effectuer certaines actions est important. Alternativement, plus la valeur correspondant à la configuration est élevée (ou faible selon un autre mode de réalisation), plus d'éléments 16 sont accessibles par le dispositif, autrement dit sont commandables par le microcontrôleur.

La partie C3 comprend deux bits permettant d'indiquer s'il est possible d'installer une configuration associée à une valeur plus élevée, ou s'il est possible d'installer une configuration associée à une valeur plus basse.

Par exemple, la partie C3 peut comprendre une première valeur binaire, par exemple la valeur 00, indiquant que toutes les configurations peuvent être installées, une deuxième valeur binaire, par exemple la valeur 11, indiquant qu'aucune des configurations ne peut être installée, une troisième valeur binaire, par exemple la valeur 01, indiquant que seules les configurations ayant une valeur plus élevée que la valeur actuelle, c'est-à-dire la valeur dans la partie C2, peuvent être installées, une quatrième valeur binaire, par exemple la valeur 10, indiquant que seules les configurations ayant une valeur plus basse que la valeur actuelle, c'est-à-dire la valeur dans la partie C2, peuvent être installées.

On aurait pu utiliser le mot 24 uniquement pour coder le numéro de la version de la configuration installée, comme cela est le cas dans des dispositifs courants. Cependant, il serait alors possible d'installer une version suivante d'une configuration différente. En effet, les configurations seraient cryptées par la même clé et le mot 24 ne servirait alors qu'à s'assurer qu'une version précédente n'est pas installée. Il serait alors possible d'installer une configuration non prévue en effectuant la mise à jour.

Un avantage des modes de réalisation décrits est qu'il est possible de s'assurer que seules certaines configurations peuvent être installées.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que dans les modes de réalisation décrits, les différentes parties des mots 24 soient dans un ordre particulier, c'est-à-dire la partie comprenant le numéro de version, la partie comprenant le numéro de configuration et éventuellement au moins une autre partie, ces parties peuvent être dans un ordre différent.

Enfin, la mise en oeuvre pratique des modes de réalisation et variantes décrits est à la portée de la personne du métier à partir des indications fonctionnelles données ci-dessus.

## Revendications

1. Procédé de configuration d'un dispositif électronique configuré pour supporter au moins deux configurations (C1, C2, C3, C4), une des configurations étant installée, le dispositif comprenant une mémoire (14), la mémoire (14) comprenant, dans une région (22) à accès limité, un mot binaire (24) comprenant :
- une première valeur représentative de la version de la configuration (C1, C2, C3, C4) installée ; et
- au moins une deuxième valeur indiquant quelles configurations (C1, C2, C3, C4) peuvent être installées,
le procédé comprenant la détermination selon la deuxième valeur si la configuration qui tente d'être installée est permise.

2. Procédé selon la revendication 1, dans lequel la mémoire (14) comprend une région (21) à lecture seule dans laquelle est contenue une clé (23) de cryptage configurée pour décrypter les mises à jour des configurations (C1, C2, C3, C4) .

3. Procédé selon la revendication 2, dans lequel la même clé (23) est utilisée pour les mises à jour de toutes les configurations (C1, C2, C3, C4).

4. Procédé selon l'une quelconque des revendications 1 à 3, dans lequel les fichiers des configurations (C1, C2, C3, C4) supportées sont tous contenus dans une mémoire (14) du dispositif.

5. Procédé selon l'une quelconque des revendications 1 à 4, dans lequel seul le fabricant du dispositif peut écrire le mot (24).

6. Procédé selon l'une quelconque des revendications 1 à 5, dans lequel la première valeur est contenue dans une première partie (A1, B1, C1) du mot (24).

7. Procédé selon l'une quelconque des revendications 1 à 6, dans lequel la deuxième valeur est contenue dans une deuxième partie (A2, B2, C2, A3, B3, C3, B4) du mot (24).

8. Procédé selon la revendication 7, dans lequel chaque configuration est associée à une troisième valeur, la deuxième partie comprend une première sous-partie (A2, B2, C2) dans laquelle est contenue la troisième valeur représentative de la configuration installée.

9. Procédé selon la revendication 8, dans lequel les troisièmes valeurs associées aux configurations (C1, C2, C3, C4) sont classées de telle manière que la croissance de la valeur corresponde à la croissance d'une caractéristique des configurations (C1, C2, C3, C4).

10. Procédé selon la revendication 8 ou 9, dans lequel le mot (24) comprend uniquement la première (C1, C2, C3, C4) partie et la première sous-partie (A2, B2, C2), les configurations (C1, C2, C3, C4) autres que celle associée à la troisième valeur ne pouvant être installées.

11. Procédé selon la revendication 8 ou 9, dans lequel le mot (24) comprend une deuxième sous-partie (A3) indiquant, pour chaque configuration (C1, C2, C3, C4) supportée, si la configuration peut être installée ou non.

12. Procédé selon la revendication 11, dans lequel la deuxième sous-partie (A3) comprend un bit pour chaque configuration (C1, C2, C3, C4) supportée, le bit prenant une quatrième valeur si l'installation de ladite configuration (C1, C2, C3, C4) est possible et une cinquième valeur si l'installation de ladite configuration (C1, C2, C3, C4) n'est pas possible.

13. Procédé selon la revendication 8 ou 9, dans lequel le mot comprend une deuxième sous-partie (B3, B4) comprenant une valeur minimale, les configurations (C1, C2, C3, C4) associées à des valeurs inférieures à la valeur minimale ne pouvant être installées.

14. Procédé selon la revendication 8, 9 ou 13, dans lequel le mot comprend une troisième sous-partie (B3, B4) comprenant une valeur maximale, les configurations (C1, C2, C3, C4) associées à des valeurs supérieures à la valeur maximale ne pouvant être installées.

15. Procédé selon la revendication 8 ou 9, dans lequel le mot comprend une deuxième sous-partie (C3) comprenant une valeur ayant une première valeur pour indiquer que toutes les configurations (C1, C2, C3, C4) peuvent être installées, une deuxième valeur pour indiquer qu'aucune configuration (C1, C2, C3, C4) ne peut être installée autre que la configuration installée, une troisième valeur pour indiquer que seules les configurations (C1, C2, C3, C4) associées à une valeur inférieure à la valeur de la configuration (C1, C2, C3, C4) installée peuvent être installées, et une quatrième valeur pour indiquer que seules les configurations (C1, C2, C3, C4) associées à une valeur supérieure à la valeur de la configuration (C1, C2, C3, C4) installée peuvent être installées.
